# EUROPEAN PATENT APPLICATION

(11) **EP 2 568 578 A2**
(43) Date of publication of application: **13.03.2013**
(21) Application number: 12183071.5
(22) Date of filing: 05.09.2012
(51) Int. Cl.: H02K 1/27

(54) **Motor and washing machine having the same**

(30) Priority: 07.09.2011 KR 20110090885; 21.08.2012 KR 20120091203
(71) Applicant: Samsung Electronics Co., Ltd., Suwon-si, Gyeonggi-do, 443-742 (KR)
(72) Inventor: Han, Jin Woo, Gyeonggi-do (KR); Kim, Young Kwan, Gyeonggi-Do (KR); Kim, Deok Jin, Gyeonggi-do (KR); In, Byung Ryel, Gyeonggi-do (KR)
(74) Representative: Walaski, Jan Filip

(57) **Abstract**

A motor includes a stator having stator cores, a coil wound around the stator cores, and a rotor disposed at an inner side of the plurality of stator cores. The rotor includes a sleeve, a plurality of rotor cores arranged in a circumferential direction of the rotor, a plurality of bridges arranged to connect the sleeve to each of the plurality of rotor cores, a plurality of permanent magnets provided between the rotor cores to form an interior space with respect to the sleeve while being spaced apart from the sleeve, and a plurality of support protrusions protruding from the sleeve in an outward radial direction of the sleeve to support the plurality of permanent magnets while corresponding to the plurality of permanent magnets, respectively, the plurality of support protrusions being arranged between the bridges while being spaced apart from the bridges in the circumferential direction of the rotor.

## Description

Embodiments of the present disclosure relate to a motor capable of reducing a magnetic flux leakage.

A motor is a machine configured to obtain a torque from electrical energy, and is provided with a stator and a rotor. The rotor and the stator are configured to have an electromagnetic interaction with each other such that the motor is rotated by a force between a magnetic field and an electric current flowing through a coil.

A permanent magnet motor, which uses a permanent magnet in generating a magnetic field, is divided into a surface mounted permanent magnet motor, an interior-type permanent magnet motor and a spoke-type permanent magnet motor.

The spoke type permanent magnet motor has a structure that offers a high degree of concentration of magnetic flux. Accordingly, the spoke-type permanent magnet motor produces a high-speed torque and a high-power output, and provides smallness in size. The spoke type permanent magnet motor is applied to a driving motor of a washing machine or an electric vehicle that require a high-speed torque and a high-power output.

In general, the spoke-type permanent magnet motor is provided with a plurality of permanent magnets, which are radially disposed around a rotary shaft, and a rotor body, which is provided to support the permanent magnets and form a magnetic path. The rotor body includes a plurality of cores, which are disposed among the permanent magnets, and a cylindrical support, which is disposed between the rotary shaft and the permanent magnet while being connected to the cores.

However, in the spoke-type permanent magnet motor, some of the magnetic flux may leak toward the rotary shaft through the cylindrical support of the rotor body. If the magnetic leakage flux is large, the amount of permanent magnet required to obtain the same power output in the motor increases, thereby increasing the manufacturing cost and making it difficult to reduce the size of the motor.

Meanwhile, in the spoke-type permanent magnet, a portion connecting the core of the rotor to the support is structurally weak, and thus the core of the rotor may be deformed or damaged due to a centrifugal force during a high-speed rotation.

Therefore, it is an aspect of the present disclosure to provide a motor having a structure capable of reducing a magnetic leakage flux and a washing machine employing the motor.

It is another aspect of the present disclosure to provide a motor having a structure offering an improved durability, and a washing machine employing the motor.

Additional aspects of the disclosure will be set forth in part in the description which follows and, in part, will be apparent from the description, or may be learned by practice of the disclosure.

In accordance with one aspect of the present disclosure, a motor includes a stator and a rotor. The stator has a plurality of stator cores arranged in a circumferential direction of the motor and a coil wound around the stator cores. The rotor is disposed at an inner side of the plurality of stator cores. The rotor includes a sleeve, a plurality of rotor cores, a plurality of bridges, a plurality of permanent magnets, and a plurality of support protrusions. The sleeve forms a shaft hole. The plurality of rotor cores is arranged in a circumferential direction of the rotor. The plurality of bridges is arranged to connect the sleeve to each of the plurality of rotor cores. Each of the plurality of permanent magnets is provided between the rotor cores and forms an interior space with respect to the sleeve while being spaced apart from the sleeve. The plurality of support protrusions protrudes from the sleeve in an outward radial direction to support the plurality of permanent magnets while corresponding to the plurality of permanent magnets, respectively, and each of the plurality of support protrusions is arranged between the bridges while being spaced apart from the bridges in the circumferential direction of the rotor.

Each of the plurality of support protrusions is disposed in a middle of the interior space in the circumferential direction of the rotor.

Each of the permanent magnets includes an inner side edge which is disposed to be exposed to the interior space, and each of the support protrusions is disposed to support a middle portion of the inner side edge of the corresponding permanent magnet.

The sleeve, the plurality of rotor cores, the plurality of bridges, and the plurality of support protrusions include same material.

Each of the support protrusions includes a contact portion making contact with the corresponding permanent magnet, and the contact portion has a circular shape that reduces a contact area with the corresponding permanent magnet.

Each of the support protrusions includes a connection portion connected to the sleeve and a contact portion making contact with the corresponding permanent magnet, and the connection portion has a width larger than a width of the contact portion.

Each of the rotor cores includes a barrier hole formed adjacent to the corresponding bridge such that a width of a magnetic path connecting to the corresponding bridge is reduced.

A minimum distance between the barrier hole and a permanent magnet adjacent to the barrier hole among the plurality of the permanent magnets is equal to or smaller than a width of the corresponding bridge.

Each of the rotor cores further includes a bridge connection portion which extends from the corresponding bridge, and the barrier hole is disposed at both sides of the bridge connection portion in the circumferential direction of the rotor.

Each of the rotor cores further includes a guide hole that is disposed at an outer side of the barrier hole in a radial direction of the rotor. The guide hole includes a guide part extending in an outward radial direction of the rotor. A magnetic path between the guide portion and a permanent magnet adjacent to the guide hole among the plurality of the permanent magnets is spread in the outer radial direction of the rotor.

Each of the bridges has a width of about 0.4mm or more and about 1.0mm or less. The motor further includes a motor shaft which is coupled to the shaft hole of the sleeve such that the motor shaft rotates together with the rotor. The sleeve includes an inner circumference making contact with the motor shaft and an outer circumference connected to the support protrusion. A thickness between the inner circumference and the outer circumference of the sleeve is about 1.0mm or more and about 3.0mm or less.

Each of the rotor cores includes a through hole allowing a fastening member to pass therethrough in an axial direction.

The rotor further includes cover plates, which are coupled to the rotor cores while being disposed to cover outer sides of the permanent magnets in the axial direction. The cover plates include non-magnetic material.

The rotor further includes injection mold material filled in the through hole.

The rotor further includes injection mold material provided around the plurality of rotor cores and the plurality of permanent magnets to reinforce the strength of rotor.

The rotor body includes at least one bridge that is disposed to connect at least one of the plurality of rotor cores to the sleeve.

The plurality of rotor cores are disposed while being spaced apart from the sleeve. In accordance with another aspect of the present disclosure, a motor includes a stator, a rotor and a motor shaft. The stator includes stator cores and a coil wound around the stator cores. The rotor is configured to rotate through electromagnetic interaction with the stator. The rotor includes a rotor body and a plurality of permanent magnets, which is inserted into an inside of the rotor body and is arranged in a circumferential direction of the rotor body. The motor shaft is coupled to the rotor body. The rotor body includes a sleeve, a plurality of rotor cores and a plurality of support protrusions. The sleeve forms a shaft hole into which the motor shaft is inserted. The plurality of rotor cores are connected to the sleeve and are spaced apart from each other in the circumferential direction of the rotor body to form a plurality of rotor slots that accommodate the plurality of permanent magnets. Each of the plurality of support protrusions protrudes from the sleeve toward the respective rotor slot to allow inner side edges of the plurality of permanent magnets to be spaced apart from the sleeve, and is disposed to support a middle portion of the inner side edge of each of the plurality of permanent magnets.

The rotor body further includes a plurality of bridges, which are configured to connect the sleeve to the respective rotor cores and are spaced apart from the support protrusions in the circumferential direction of the rotor body.

Each of the bridges is disposed in a middle of the two adjacent support protrusions. The plurality of permanent magnets includes a first permanent magnet and a second permanent magnet that are adjacent to each other. The plurality of support protrusions includes a first support protrusion to support the first permanent magnet and a second support protrusion to support the second permanent magnet. The rotor body further includes a first protrusion connection bridge and a second protrusion connection bridge which are configured to connect one of the rotor cores disposed between the first permanent magnet and the second permanent magnet to the first support protrusion and the second support protrusion, respectively.

At least one portion of the first protrusion connection bridge is spaced apart from the inner side edge of the first permanent magnet, and at least one portion of the second protrusion connection bridge is spaced apart from the inner side edge of the second permanent magnet.

Each of the rotor cores includes a barrier hole formed adjacent to the first and the second protrusion connection bridges such that a width of a magnetic path connecting to each of the first and the second protrusion bridges is reduced.
In accordance with another aspect of the present disclosure, a washing machine includes a tub, a drum and a motor. The tub is configured to store washing water. The drum is disposed inside the tub, and is rotatably supported by the tub through a driving shaft. The motor is mounted at a lower side of the tube to rotate the driving shaft. The motor includes a stator, a motor shaft, and a rotor. The stator includes stator cores and a coil wound around the stator cores. The motor shaft is connected to the driving shaft through a power transmission apparatus. The rotor is disposed at an inner side of the stator, and is coupled to the motor shaft. The rotor includes a sleeve, a plurality of rotor cores, a plurality of permanent magnets, a plurality of support protrusions and a plurality of bridges. The sleeve forms a shaft hole. The plurality of rotor cores are connected to the sleeve, and are arranged while being spaced apart from each other in a circumferential direction of the rotor to define a plurality of rotor slots. The plurality of permanent magnets are inserted into the plurality of rotor slots, respectively, and have inner side edges that are spaced apart from the sleeve. The plurality of support protrusions protrude from the sleeve to the rotor slots and are arranged to support the inner side edges of the plurality of permanent magnets. Each of the plurality of bridges is connected to the corresponding rotor core and is disposed between the support protrusions in the circumferential direction of the rotor.

The plurality of bridges are configured to connect the respective rotor cores to the sleeve while being spaced from the plurality of support protrusions.

The plurality of bridges are configured to connect the respective rotor cores to the plurality of support protrusions.

A north pole and a south pole of each of the permanent magnets are arranged in the circumferential direction of the rotor, and each of the support protrusions is disposed to support a portion in which the north pole joins the south pole.

According to the present disclosure, the magnetic flux leaking toward the motor shaft is reduced, so that the performance of the motor is improved and the motor is reduced in size for the same power output.

The structure of the rotor is strengthened, thereby improving the durability of the motor and preventing the rotor from being deformed or damaged during a high-speed rotation.

These and/or other aspects of the disclosure will become apparent and more readily appreciated from the following description of the embodiments, taken in conjunction with the accompanying drawings of which:
FIG. 1 is a sectional view illustrating the configuration of a motor according to an embodiment of the present disclosure;
FIG. 2 is a perspective view illustrating a stator of the motor according to the embodiment of the present disclosure;
FIG. 3 is a perspective view illustrating a rotor and a motor shaft of the motor according to the embodiment of the present disclosure;
FIG. 4 is a view illustrating the stator and the rotor of the motor according to the embodiment of the present disclosure;
FIG. 5 is an enlargement view illustrating a portion of the rotor of the motor according to the embodiment of the present disclosure;
FIG. 6 is an enlargement view illustrating a portion of a rotor of a motor according to another embodiment of the present disclosure;
FIG. 7 is an enlargement view illustrating a portion of a rotor of a motor according to another embodiment of the present disclosure;
FIG. 8 is an enlargement view illustrating a portion of a rotor of a motor according to another embodiment of the present disclosure;
FIG. 9 is an enlargement view illustrating a portion of a rotor of a motor according to another embodiment of the present disclosure;
FIG. 10 is a view illustrating a rotor of a motor according to another embodiment of the present disclosure;
FIG. 11 is a view illustrating a rotor of a motor according to another embodiment of the present disclosure;
FIG. 12 is a view illustrating a rotor of a motor according to another embodiment of the present disclosure; and
FIG. 13 is a view illustrating a washing machine according to an embodiment of the present disclosure.

Reference will now be made in detail to the embodiments of the present disclosure, examples of which are illustrated in the accompanying drawings, wherein like reference numerals refer to like elements throughout. In the following description, a lengthwise direction along a motor shaft will be referred to as an axial direction (X). The direction of circumference of a circle around the motor shaft and the radial direction of a circle around the motor shaft are referred to as a circumferential direction (C) and a radial direction (R), respectively.

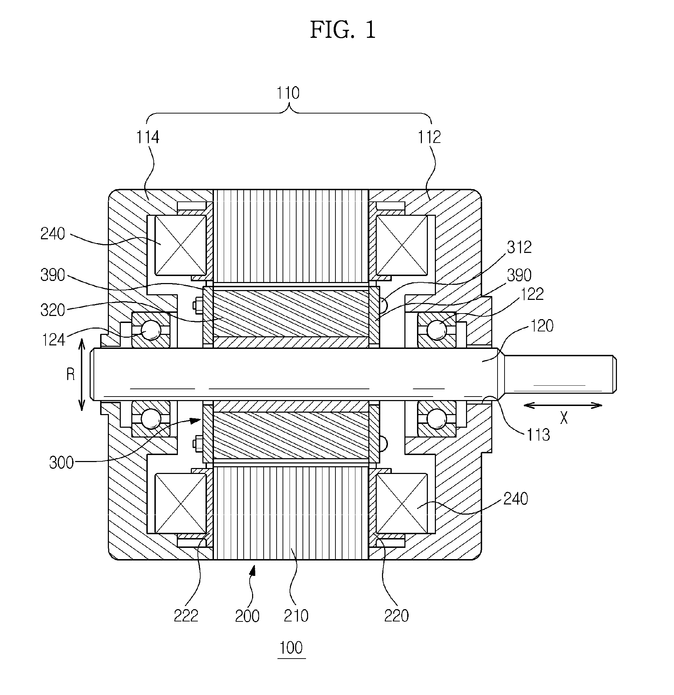

Referring to FIG. 1, a motor 100 includes a motor housing 110 forming an external appearance of the motor 100. The motor housing 110 includes a first housing 112 and a second housing 114 that are separated in the axial direction of the motor 100. The first housing 112 and the second housing 114 are coupled to the stator 200.
A stator 200 and a rotor 300 are disposed inside the motor housing 110. The stator 200 is fixed to the motor housing 110. The rotor 300 is configured to rotate through electromagnetic interaction with the stator 200. The rotor 300 is disposed as to enable to rotation inside the stator 200.

A motor shaft 120 is inserted into the rotor 300 such that the motor shaft 120 rotates together with the rotor 300. One side of the motor shaft 120 is rotatably supported by the first housing 112 through a bearing 122, and the opposite side of the motor shaft 120 is rotatably supported by the second housing 114 through a bearing 124. An end of the one side of the motor shaft 120 is exposed to the outside of the motor housing 110 through an opening 113 formed through the first housing 112.

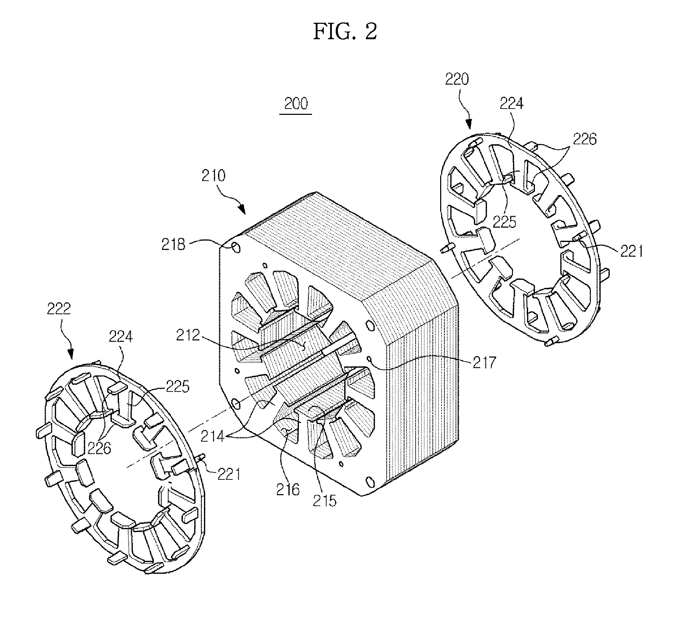

Referring to FIGS. 1, 2, and 4, the stator 200 includes a stator body 210, a first insulator 220, a second insulator 222, and a coil 240. In FIG. 2, the coil 240 is not shown.
The stator body 210 is formed in the middle thereof with a rotor accommodating portion 212 serving as a space to accommodate the rotor 300.

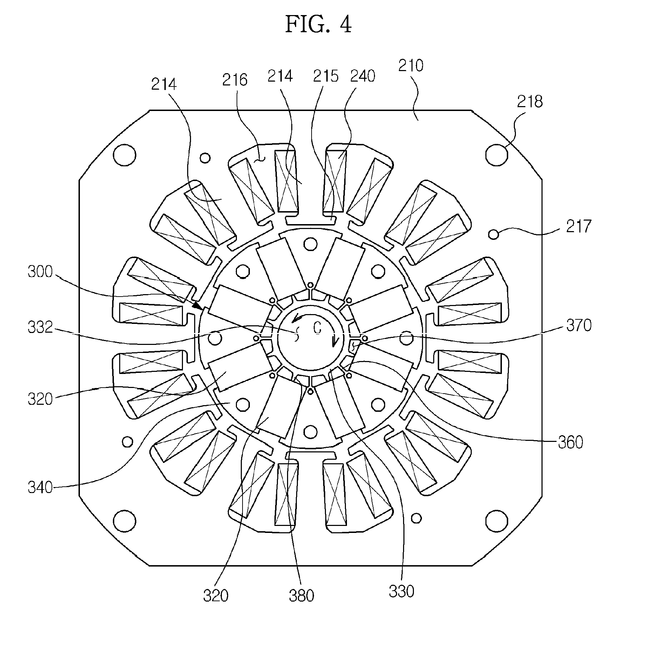

Stator cores 214 are arranged around the rotor accommodating portion 212 in the circumferential direction (denoted as "C" in FIG. 4). The stator cores 214 radially extend from the rotor accommodating portion 212. The stator body 210 is formed by stacking up pressed iron plates against one another.

The stator cores 214 are disposed while being spaced apart from one another in the circumferential direction to form stator slots 216 among the stator cores 214. The coil 240 is wound around the stator cores 214, so that the coil 240 is accommodated in the stator slots 216. An inner side edge of each of the stator cores 214 adjacent to the rotor 300 is partially widened to form an extension core portion 215. A gap is formed between an inner surface of the extension core portion 215 and an outer surface of the rotor 300 such that the rotor 300 rotates in the gap.

The first insulator 220 and the second insulator 222 include electric insulation material, and are disposed at lateral sides of the stator body in the axial direction. The first insulator 220 and the second insulator 222 are coupled to both sides of the stator body 210 to cover the stator core 214. Each of the first insulator 220 and the second insulator 222 has a coupling protrusion 221 protruding toward the stator body 210. The coupling protrusion 221 is inserted into a coupling hole 217 formed in the stator body 210.

Each of the first insulator 220 and the second insulator 222 includes a rim 224 provided in a ring type, coil supporting portions 225 arranged to corresponding to the stator cores 214, respectively, and coil guide portions 226 protruding at a inner side and an outer side of a radial direction of each of the coil supporting portions 226. The coil supporting portions 225 are spaced apart from one another in the circumferential direction to form spaces each corresponding to the stator slots 216.

The coil 240 is wound around the stator core 214 and the coil supporting portions 225 of the first and the second insulators 220 and 222 in a state that the first insulator 220 and the second insulator 222 are coupled to the stator body 210.

The stator body 210 has an insertion hole 218 that penetrates the stator body 210 in the axial direction. A fastening member (not shown), such as a pin, a rivet or a bolt, is inserted into the inversion hole 218 to couple plates forming the stator body 210 to one another.

A housing insertion (not shown) is formed in each of the first housing 112 and the second housing 114 to correspond to the insertion hole 218 of the stator body 210 such that the first housing 112, the second housing 114, and the stator 200 are fixed through a single coupling member.

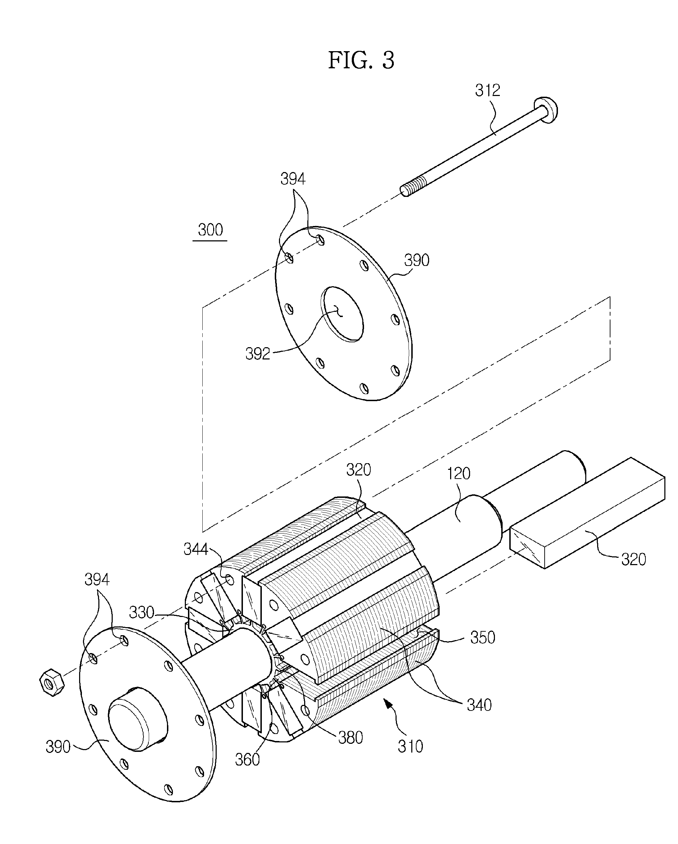

Referring to FIGS. 3 to 5, the rotor 300 includes a rotor body 310 disposed on the rotor accommodating portion 212 of the stator body 210. The rotor body 310 is formed by stacking pressed silicon plate members up against one another.

Permanent magnets 320 are inserted into the rotor body 310. The permanent magnets 320 are arranged in the circumferential direction of the rotor 300 while being radially disposed around the motor shaft 120. Although the motor shown in FIG. 3 includes eight permanent magnets, the number of permanent magnets is not limited thereto and may vary. The permanent magnet may be ferrite magnets or rare earth magnets including neodymium or samarium.

An inner side edge 321 of the permanent magnet 320 is adjacent to the motor shaft 120, and an outer side edge 322 of the permanent magnet 320 is adjacent to the stator 200. The inner and outer side edges 321 and 322 have short edges 333 and 334 that extend in the circumferential direction of the rotor 300. The short edges 333 and 334 are connected to the long edges 335 and 336 of the inner and outer side edges 321 and 322 that extend in the radial direction of the rotor 300. The long edges 335 and 336 have lengths longer than the short edges 333 and 334.

The N pole and the S pole of the permanent magnet 320 are arranged in the circumferential direction. A first permanent magnet 320a and a second permanent magnet 320b adjacent to each other among the permanent magnets 320 are disposed such that the same poles of the first and the second permanent magnets 320a and 320b face each other. According to a magnetic circuit formed through such configuration, a magnetic flux generated from the permanent magnet is concentrated, so that the smallness of the motor in size may be achieved while the performance of the motor may be enhanced.

The rotor body 310 includes a sleeve 330 forming a shaft hole 332, into which the motor shaft 120 is inserted, and rotor cores 340 connected to the sleeve 330.
The sleeve 330 is provided in the form of a ring, and includes an inner circumference 334, which makes contact with the motor shaft 120 inserted into the shaft hole 332, and an outer circumference 336, which faces the permanent magnets 320 inserted into the rotor body 310.

The thickness (t) between the inner circumference 334 and the outer circumference 336 of the sleeve 330 is about 1.0mm or more and about 3.0mm or less. If the thickness (t) is larger than 3.0mm, the magnetic flux leaking from the rotor core 340 to the sleeve 330 is significantly great. If the thickness (t) is smaller than 1.0mm, the sleeve 330 may be deformed when the motor shaft 120 is press-fitted to the shaft hole 332.
The rotor cores 340 support the permanent magnets 320 and form paths of magnetic flux that is generated from the permanent magnet 320. The rotor cores 340 are arranged in the circumferential direction of the rotor 300, and are spaced apart from one another to form rotor slots 350, which are configured to accommodate the permanent magnets 320, respectively.

The rotor cores 340 are connected to the sleeve 330 through bridges 360. The bridges 360 are arranged in the circumferential direction of the rotor 300 to correspond to the rotor cores 340, respectively. The bridges 360 extend from the outer circumference 336 of the sleeve 360 in the outward radial direction to be connected to the inner side edges of the rotor cores 340.

The bridge 360 has a width (W1) of 1.0m or less. The width (W1) of the bridge 360 affects the amount of magnetic flux leaking to the sleeve 330 through the bridge 360. If the width (W1) of the bridge 360 is small, the magnetic resistance is increased and thus the amount of magnetic leakage flux is reduced.

However, since the bridge 360 needs to serve to connect the rotor core 340 to the sleeve 330, if the width (W1) of the bridge 360 is excessively small, the bridge 360 is damaged or deformed during a high-speed rotation. Accordingly, the bridge 360 needs to have a width (W1) of 0.4 or more to maintain the structural strength.

The permanent magnets 320 are accommodated in the rotor slots 350 which are defined between two adjacent cores 340. The permanent magnets 320 are spaced apart from the sleeve 330 to form interior spaces 370 between the sleeve 330 and each of the permanent magnets 320. The interior spaces 370 prevent the magnetic flux of the permanent magnet 320 from leaking to the motor shaft 120 through the sleeve 330. The rotor core 340 is provided with an outer side end thereof with locking protrusions 341 that protrude to two adjacent rotor slots 350. Both ends of the outer side edge 322 of the permanent magnet 320 are supported by the locking protrusions 341 that protruding from two rotor cores 340 adjacent to the permanent magnet 320. A middle portion of the outer side edge 322 of the permanent magnet 320 is exposed to the stator 200 through a space 342 between the locking protrusions 341.

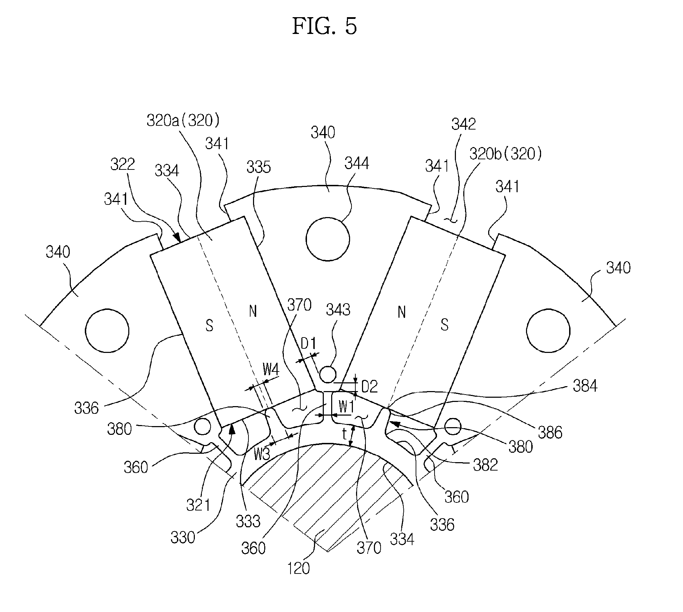

Referring to FIG. 5, the rotor body 310 includes support protrusions 380 which are configured to support the inner side edges 321 of the permanent magnets 320 such that the permanent magnets 320 are spaced apart from the sleeve 330. The support protrusions 380 protrude from the outer circumference 336 of the sleeve 330 in the outer radial direction while being disposed to correspond to the respective permanent magnets 320. The sleeve 330, the rotor cores 340, the bridges 360, and the support protrusions 380 are integrally formed with one another using the same material to form the rotor body 310.

The support protrusions 380 are disposed between the bridges 360 in the circumference direction of the rotor 300. Each of the support protrusions 380 is spaced apart from two bridges 360 adjacent to the support protrusion 380. Each of the support protrusions 380 is separated from the two bridges 360 adjacent to the support protrusion 380.

If a structure configured to support a permanent magnet is integrally formed with a bridge, the width of the bridge is large, and thus the magnetic flux leaking to the motor shaft is increased. However, if the support protrusion 380 is separated from the bridge 360, as shown in FIG. 5, the width of the bridge 360 is small, and thus the magnetic flux leaking to the motor shaft is decreased.

If the support protrusion 380 is disposed adjacent to the bridge 360, even though the support protrusion 380 is spaced apart from the bridge 360, the magnetic flux leaking to the sleeve 330 through the support protrusion 380 is great. Accordingly, in order that the support protrusion 380 is spaced apart from two bridges 360 adjacent to the support protrusion 380 as far as possible, the support protrusion 380 may be disposed in the middle portion of the interior space 370 in the circumferential direction of the rotor 200. In addition, each bridge 360 may be disposed in the middle portion between the two adjacent support protrusions 380.

The support protrusion 380 is disposed to support the middle portion of the inner side edge 321 of the permanent magnet 320. In this manner, the permanent magnet 320 is stably supported in supporting the inner side edge 321 of the permanent magnet 320 using only one support protrusion 380. In addition, the middle portion of the inner side edge 321 of the permanent magnet 320 corresponds to a portion where N-pole and S-pole of the permanent magnet 320 join each other. By allowing the support protrusion 380 to support the portion where N-pole and S-pole of the permanent magnet 320 join each other, the magnetic flux leaking through the support protrusion 380 is reduced.

Each of the support protrusions 380 includes a connection portion 382, which is connected to the sleeve 330 and a contact portion 384, which makes contact with the corresponding permanent magnet.

A width (W3) of the connection portion 382 is larger than a width (W4) of the contact portion 384_{.} The connection portion 382 of the support protrusion 380 needs to have a predetermined width or more such that the structural strength of the support protrusion 380 is maintained. In order to stably support the permanent magnet 320, the contact portion 384 of the support protrusion 380 needs to have a large width but such a large width may cause a problem in magnetizing the permanent magnet 320. The permanent magnet 320 is formed by inserting non-magnetized material into the rotor slot 350 and then by magnetizing the material. In this case, if the width (W4) of the contact portion 384 making contact with the permanent magnet 320 is large, the magnetic field needing to be used for magnetization is leaking and thus an area of the permanent magnet 320 around the contact portion 384 is incompletely magnetized.
In this regard, the width (W4) of the contact portion 384 of the support protrusion 380 is provided to be narrow as long as the support protrusion 380 stably supports the permanent magnet 320. In order to reduce the contact area between the contact portion 384 of the support protrusion 380 and the corresponding permanent magnet 320, the contact portion 380 may have a circular portion 386.

Referring to FIGS. 4 and 5, each of the rotor cores 340 has a barrier hole 343 to reduce the magnetic flux leaking to the corresponding bridge 360. The barrier hole 343 is disposed adjacent to the bridge 360 such that the width of a magnetic path connecting to the corresponding bridge 360 is reduced. The barrier hole 343 may have a circular cross section.

In order that the width of a magnetic path formed with respect to the first permanent magnet 320a is substantially identical to the width of a magnetic path formed with respect to the second permanent magnet 320b, the barrier hole 343 is disposed in the middle portion between the first permanent magnet 320a and the second permanent magnet 320b.

A minimum distance (D1) between the barrier hole 343 and the permanent magnet 320 adjacent to the barrier hole 343 is equal to or smaller than the width (W1) of the corresponding bridge 360. In addition, a minimum distance (D2) between the barrier hole 343 and the corresponding bridge 360 is equal to or smaller than the width (W1) of the corresponding bridge 360.

If the minimum distances D1 and D2 of the barrier hole 343 are smaller, the magnetic leakage flux is effectively reduced but the strength of the rotor core 340 is degraded. Accordingly, in consideration both of the structural stability and the improvement of the magnetic leakage flux, the minimum distances D1 and D2 may be substantially equal to the width (W1) of the bridge 360.

Referring to FIGS. 1, 3, 4, and 5, the rotor body 310 may have a through hole 344 formed through the rotor core 340 in the axial direction. The through hole 344 may be provided in plural for at least two of the rotor cores 340. In FIG. 4, the through hole 344 is shown as being formed for each of the rotor cores 340 as an example.
The through hole 344 is disposed closer to the outer side end of the rotor core 340 than the inner side end.

In order to ensure the structural stability of the rotor 300, a fastening member 312, such as a rivet, a bolt, and a pin, may be coupled to the through hole 344.

The rotor 300 includes cover plates 390 which are disposed at lateral sides of the rotor body 310 in the axial direction. The cover plate 390 is formed in the middle thereof with a shaft accommodating hole 392 to accommodate the motor shaft 120.
The cover plates 390 are disposed to cover outer sides of the permanent magnets 320 in the axial direction to prevent the permanent magnets 320 from being separated from the rotor slots 350 in the axial direction. In addition, if an unbalance occurs in the rotor 300, the cover plate 390 is used to keep a balance in the rotor. The cover plate 390 may include non-magnetic material, for example, copper and stainless steel.
The cover plate 390 has a plate hole 394 corresponding to the through hole 344 formed through the rotor core 340. The cover plates 390 are disposed at lateral sides of the rotor body 310 and the fastening member 312 is inserted into the plate hole 394 and the through hole 344 to form an integral body of the cover plates 390 and the rotor body 310, thereby improving the structural strength of the rotor 300.

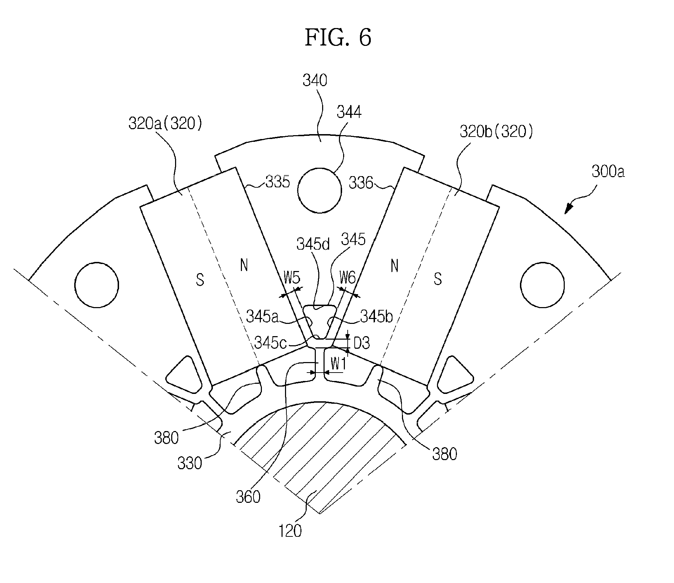

FIG. 6 shows the shape of an alternative example of the barrier hole. Referring to FIG. 6, a rotor 300a has a barrier hole 345 which is formed in each of the rotor cores 340 to reduce magnetic flux leaking to the bridge 360. The barrier hole 345 is disposed in the middle portion between the first permanent magnet 320a and the second permanent magnet 320b.

The barrier hole 345 includes a first extension portion 345a, which extends along the long edge 335 of the first permanent magnet 320a, and a second extension portion 345b, which extends along the long edge 336 of the second permanent magnet 320b. The first extension portion 345a and the second extension portion 345b are connected to each other through an inner side connection portion 345c and an outer side connection portion 345d, thereby forming the barrier hole 345 in a trapezoidal shape. Each of the width (W5) of a magnetic path formed between the first extension portion 345a and the first permanent magnet 320a, the width (W6) of a magnetic path formed between the second extension portion 345b and the second permanent magnet 320b, and the distance (D3) between the inner side connection portion 345c and the bridge 360 is equal to or smaller than the width (W1) of the bridge 360.

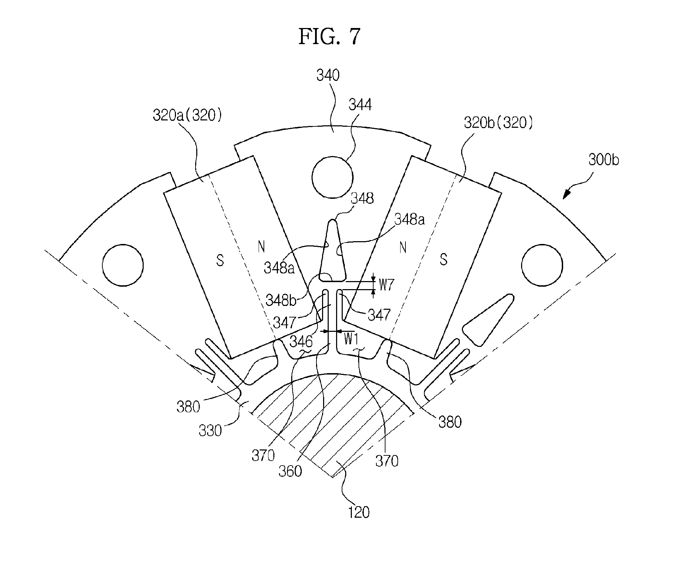

FIG. 7 shows an alternative example of the barrier and a guide hole. Referring to FIG. 7, each of the rotor cores 340 includes a bridge connection portion 346 which extends from the corresponding bridge 360 in the outward radial direction. The bridge connection portion 346 has the same width as that of the bridge 360.

Barrier holes 347 are formed at both sides of the bridge connection portion 346 in the circumferential direction of a rotor 300b. That is, each of the barrier holes 347 is disposed between the first permanent magnet 320a and the bridge connection portion 346 and between the second permanent magnet 320b and the bridge connection portion 346.

The barrier hole 347 extends along the bridge connection portion 346 in the radial direction of the rotor 300b. An inner side end of the barrier hole 347 communicates with the interior space 370.

A guide hole 348 is formed at an outward radial side of the barrier hole 347. The guide hole 348 includes two guide portions 348a extending in an outward radial direction of the rotor 300b and a guide connection portion 348b connecting the two guide portions 348a to each other.

The guide portion 348a is provided in a predetermined shape that spreads the magnetic path between the guide portion 348a and the permanent magnet 320 adjacent to the guide hole 348 in the outward radial direction of the rotor 300b. The guide hole 348 effectively guides the magnetic flux of the permanent magnet 320 toward the stator 200, and reduces the magnetic flux leaking to the sleeve 330.

The guide connection portion 348b is disposed adjacent to the bridge 360 to reduce the width (W7) of a magnetic path formed between the guide connection portion 348b and the bridge 360. The guide connection portion 348b is disposed such that the width (W7) is substantially equal to the width (W1) of the bridge 360.

The through hole 344 is formed at an outer side of the guide hole 348 in the radial direction of the rotor 300b.

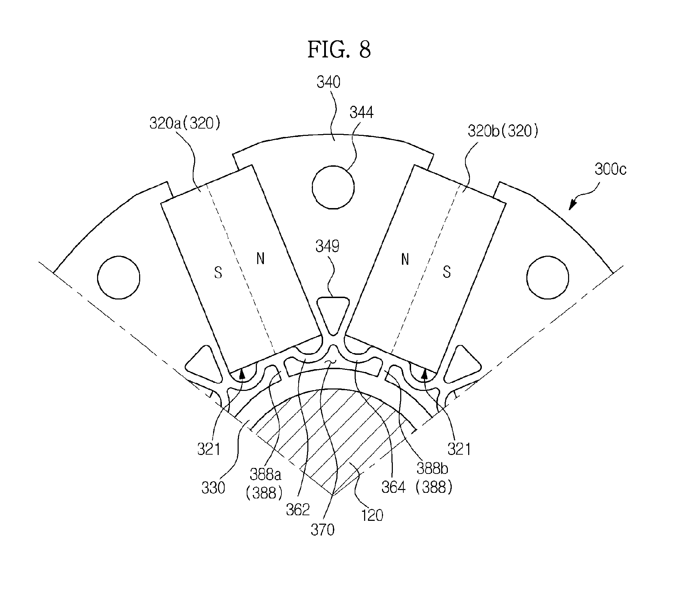

FIG. 8 shows an example in which the rotor core is connected to the sleeve through a support protrusion. Referring to FIG. 8, a rotor 300c includes support protrusions 388, each of which is configured to support the middle portion of the inner side edge 321, such that the permanent magnet 320 is spaced apart from the sleeve 330.

The support protrusions 388 protrude from the sleeve 330 to the respective permanent magnets 320. A first support protrusion 388a is disposed to support the first permanent magnet 320a and a second support protrusion 388b is disposed to support the second permanent magnet 320b adjacent to the first permanent magnet 320a. The rotor core 340 between the two permanent magnets 320a and 320b is connected to the first support protrusion 388a through a first protrusion connection bridge 362, and is connected to the second support protrusion 388b through a second protrusion connection bridge 364. The sleeve 330, the rotor cores 340, the first and the second protrusion connection bridges 362 and 364, and the first and the second support protrusions 388 are integrally formed one another using the same material to form the rotor body.

Each of the first protrusion connection bridge 362 and the second protrusion connection bridge 364 serves as a magnetic path formed between the rotor core 340 and the sleeve 330. As the magnetic path is elongated as shown in FIG. 8, the magnetic resistance is increased, so that the magnetic flux leaking to the sleeve 330 is reduced. The first protrusion connection bridge 362 extends from the inner side end of the rotor core 340 to the interior space between the first permanent magnet 320a and the sleeve 330, and is connected to the first support protrusion 388a. The second protrusion connection bridge 364 extends from the inner side end of the rotor core 340 to the interior space between the second permanent magnet 320b and the sleeve 330, and is connected to the second support protrusion 388b.

The first protrusion connection bridge 362 makes contact at the middle portion of the first permanent magnet 320a with the inner side edge 321 of the first permanent magnet 320a. The second protrusion connection bridge 364 makes contact at the middle portion of the second permanent magnet 320b with the inner side edge 321 of the second permanent magnet 320b. The first protrusion connection bridge 362 is spaced apart at the edge portion of the first permanent magnet 320a from the inner side edge 321 of the first permanent magnet 320a. The second protrusion connection bridge 364 is spaced apart at the edge portion of the second permanent magnet 320b from the inner side edge 321 of the second permanent magnet 320b. Accordingly, a space is formed between the inner side edge 321 of each of the first and the second permanent magnets 320a and 320b and each of the first and the second protrusion connection bridges 362 and 364. Such a configuration having a space effectively prevents the magnetic flux from leaking to the sleeve through the first and the second protrusion connection bridges 362 and 364.

A barrier hole 349 is formed in the rotor core 340 to reduce the magnetic flux leaking to the first and the second protrusion connection bridges 362 and 364. The barrier hole 349 is disposed adjacent to the first and the second protrusion connection bridges 362 and 364 that correspond to the barrier hole 349, thereby narrowing the magnetic path connecting to the first and the second protrusion connection bridges 362 and 364. The barrier hole 349 is disposed in the middle portion between the first permanent magnet 320a and the second permanent magnet 320b.

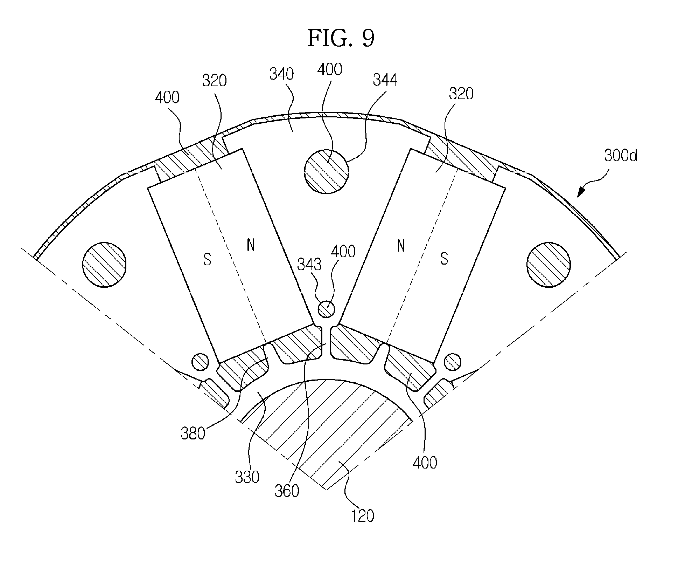

FIG. 9 shows an alternative example obtained by injecting resin onto the rotor of FIG. 5. The strength of a rotor 300d is improved by an injection molding material 400 formed through an injection molding.

The rotor body 310 having the permanent magnets 320 coupled thereto is inserted into a mold (not shown) is subject to the injection molding by use of resin, so that the interior space between the permanent magnet 320 and the sleeve 330, thereby filling the barrier hole 343, the through hole 344, and the space between the locking protrusions 341 of the rotor core 340 the rotor body 310 with the injection molding material 400. The injection molding material 400 is using non-magnetic material, and serves to reduce the amount of magnetic flux leaking to the sleeve 330 while improving the structural stability of the rotor 300.

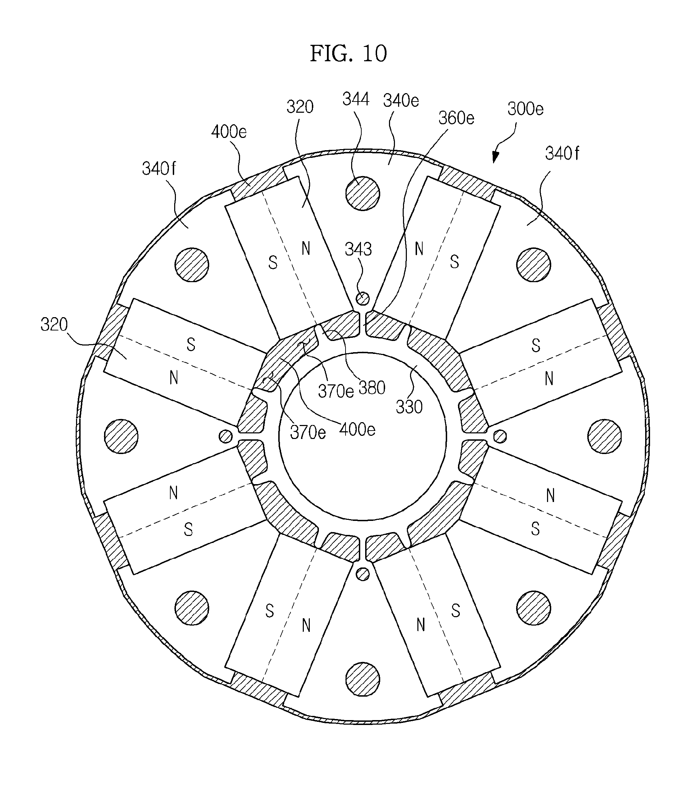

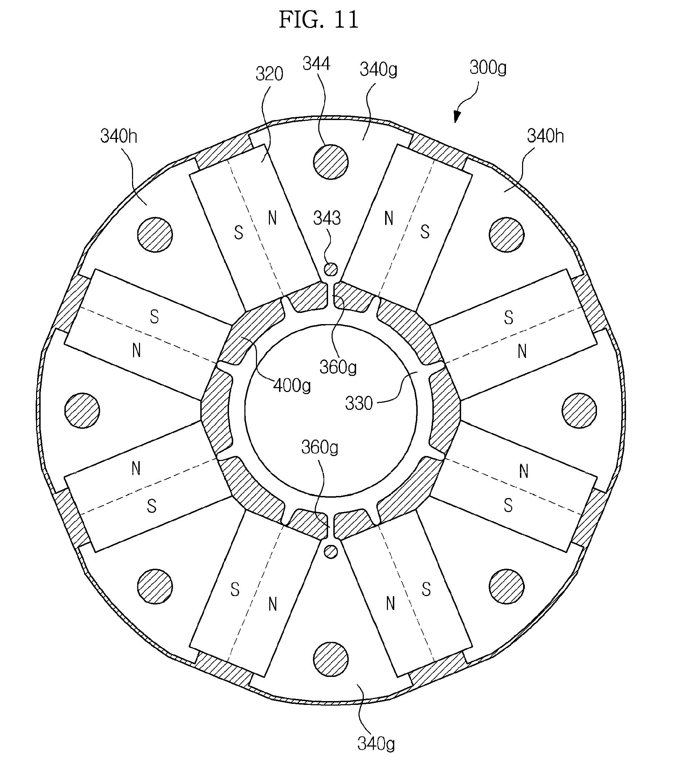

If the injection molding material 400 is filled in the through hole 344, an additional fastening member does not need to be coupled to the rotor body
FIGS. 10 and 11 show examples of rotors 300e and 300g in which the bridge connecting the rotor core to the sleeve is partially removed.

Referring to FIG. 10, the rotor 300e includes a first rotor core 340e connected to the sleeve 330 through a bridge 360e, and a second rotor core 340f disposed while being spaced apart from the sleeve 330. Through the configuration as such, the magnetic path toward the sleeve 330 is removed, so that the amount of magnetic flux leaking from the second rotor core 340f to the sleeve 330 is reduced.

The permanent magnet 320 is disposed while being spaced apart from the sleeve 330 to form an interior space 370e between the permanent magnet 320 and the sleeve 330. The inner side edge of the permanent magnet 320 is supported by the support protrusion 380 that protrudes from the sleeve 330.

The first rotor core 340e and the second rotor core 340f are alternately disposed in the circumferential direction of the rotor 300e. As the second rotor core 340f is disposed while being spaced apart from the sleeve 330, the two adjacent interior spaces 370e are connected to each other.

The first rotor core 340e is provided with the barrier hole 343 to reduce the magnetic flux leaking toward the bridge 360e corresponding to the first rotor core 340. The first rotor core 340e and the second rotor core 340f are each provided with the through hole 344 formed in the axial direction.

In a case where a bridge connecting a rotor core to a sleeve is removed, the strength of a rotor may be degraded. However, the strength of the rotor 300e is reinforced by insert mold material 400e formed through injection molding. The injection mold material 400e is filled in the interior space 370e between the permanent magnet 320 and the sleeve 330 and in a gap between the second rotor core 340f and the sleeve 330. The injection mold material 400e covers the outer surfaces of the rotor cores 340e and 340f and the permanent magnets 320. In addition, the injection mold material 400e is filled in the barrier hole 343 and the through hole 344.

Referring to FIG. 11, a pair of first rotor cores 340g are connected to the sleeve 330 through a bridge 360g. Second rotor cores 340h provided between the pair of first rotor cores 340g are arranged in the circumferential direction. The second rotor cores 340h are disposed while being spaced apart from the sleeve 330 so as to reduce the amount of magnetic flux leaking from the second rotor core 340h to the sleeve 330. The strength of the rotor 300g is reinforced by insert mold material 400g that covers an interior space and the outer surfaces of the rotor cores 340g and 360h.

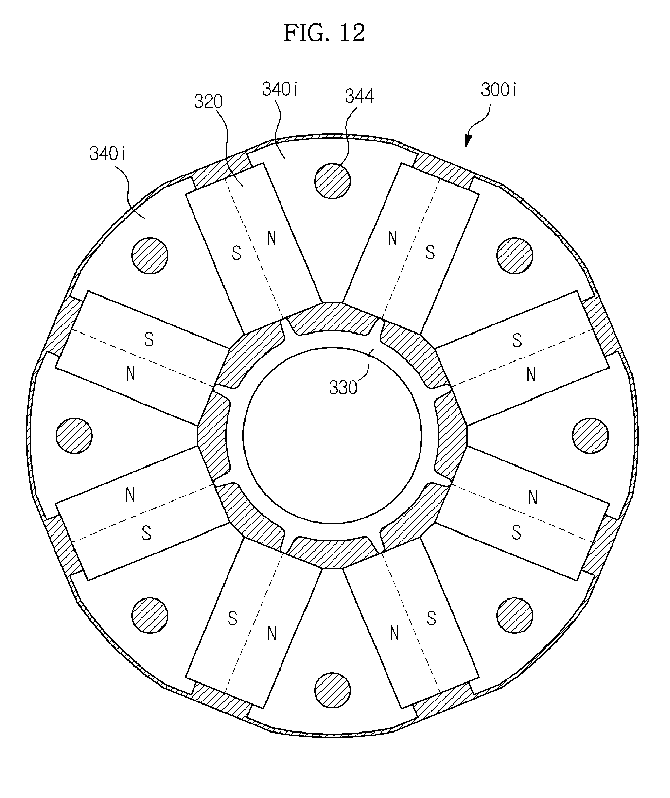

FIG. 12 shows a rotor 300i disposed so that all rotor cores 340i are spaced apart from the sleeve 330.

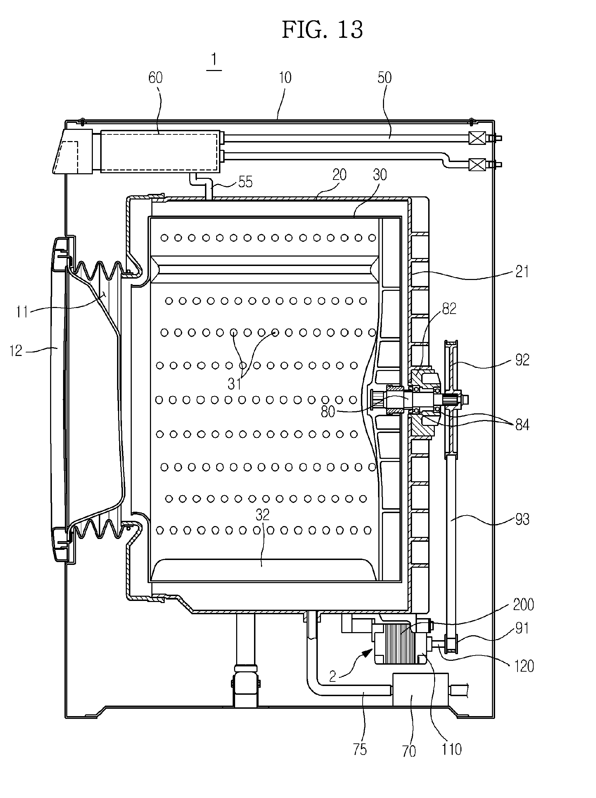

FIG. 13 is a view illustrating a washing machine according to an embodiment of the present disclosure.

Referring to FIG. 13, a washing machine 1 includes a cabinet 10 forming the external appearance of the washing machine 1, a tub 20 disposed inside the cabinet 10 to store water, a drum 30 rotatably disposed inside the tub 20, and a driving motor 2 to drive the drum 30.

An input opening 11 is formed at a front surface of the cabinet 10 to input laundry to the inside the drum 30. The input opening 11 is open/closed through a door 12 installed on the front surface of the cabinet 10.

A water supply pipe 50 is installed at an upper side of the tub 20 to provide the tub 20 with washing water. One side of the water supply pipe 50 is connected to an external water source (not shown), and the other side of the water supply pipe 50 is connected to a detergent dispensing apparatus 60. The detergent dispensing apparatus 60 is connected to the tub 20 through a connection pipe 55. Water of the water supply pipe 50 is provided to the inside the tub 20 together with detergent by passing through the detergent dispensing apparatus 60.

A drain pump 70 and a drain pipe 75 are installed at a lower side of the tub 20 to discharge the water in the tub 20 to outside.

A plurality of through holes 31 are formed through the circumference of the drum 30 to circulate washing water. A lifter 32 is installed at the inner circumferential surface of the drum 30 to lift and drop laundry during rotation of the drum 30.

A driving shaft 80 is coupled to the drum 30 while being rotatably supported by the tub 20. One end of the driving shaft 80 extends to the outside the tub 20 while passing through a rear side wall 21 of the tub 20.

A bearing housing 82 is installed at the rear side wall of the tub 20 to rotatably support the driving shaft 80. The bearing housing 82 includes an aluminum alloy. The bearing housing is inserted into the rear side wall of the tub 20 when the tub 20 is formed through injection molding. A bearing 84 is installed between the bearing housing 82 and the driving shaft 80 to rotate the driving shaft 80 smoothly.

The driving motor 2 is installed at a lower side of the tub 20. The driving motor 2 includes the motor housing 110, the stator 200 fixed to the motor housing 110, and the rotor (not shown) disposed at the inner side of the stator 200. The driving motor 2 includes the stator and the rotor that have been described with reference to FIGS. 5 to 12.

A motor pulley 91 is installed on the end of the motor shaft 120 that protrudes to the outside the motor housing 110. A drum pulley 92 is installed on the driving shaft 40 connected to the drum 30. The motor pulley 91 may be connected to the drum pulley 92 through a belt 93. The motor pulley 91, the drum pulley 92, and the belt 93 form a power transmission apparatus to transfer a driving force of the motor 100 to the driving shaft 40.

Although the description of FIG. 13 has been made in relation to a washing machine as an example using the motors shown in FIGS. 1 to 12, the motors of FIGS. 1 to 12 may be applied to various electronic devices, such as a washing machine, a clothes dryer, and an air conditioner, and also to an electric vehicle that requires a small size and a high-power output motor.

Although a few embodiments of the present disclosure have been shown and described, it would be appreciated by those skilled in the art that changes may be made in these embodiments without departing from the principles and spirit of the disclosure, the scope of which is defined in the claims and their equivalents.

## Claims

1. A motor comprising:
a stator having a plurality of stator cores arranged in a circumferential direction of the motor and a coil wound around the stator cores; and
a rotor disposed at an inner side of the plurality of stator cores,
wherein the rotor comprises:
a sleeve forming a shaft hole;
a plurality of rotor cores arranged in a circumferential direction of the rotor;
and
a plurality of permanent magnets provided between the rotor cores, the plurality of permanent magnets forming an interior space with respect to the sleeve while being spaced apart from the sleeve; and
a plurality of support protrusions, which protrude from the sleeve in an outward radial direction of the sleeve to support the plurality of permanent magnets while corresponding to the plurality of permanent magnets, respectively.

2. The motor of claim 1, further comprising:
a plurality of bridges arranged to connect the sleeve to each of the plurality of rotor cores,
wherein each of the support protrusions is arranged between the bridges while being spaced apart from the bridges in the circumferential direction of the rotor.

3. The motor of claim 2, wherein each of the plurality of support protrusions is disposed in a middle of the interior space in the circumferential direction of the rotor.

4. The motor of claim 2, wherein each of the permanent magnets comprises an inner side edge which is disposed to be exposed to the interior space, and each of the support protrusions is disposed to support a middle portion of the inner side edge of the corresponding permanent magnet.

5. The motor of claim 2, wherein the sleeve, the plurality of rotor cores, the plurality of bridges and the plurality of support protrusions are integrally formed with one another.

6. The motor of claim 2, wherein each of the support protrusions comprises a connection portion connected to the sleeve and a contact portion making contact with the corresponding permanent magnet, and the connection portion has a width larger than a width of the contact portion.

7. The motor of claim 2, wherein each of the rotor cores comprises a barrier hole formed adjacent to the corresponding bridge such that a width of a magnetic path connecting to the corresponding bridge is reduced.

8. The motor of claim 7, wherein a minimum distance between the barrier hole and a permanent magnet adjacent to the barrier hole among the plurality of the permanent magnets is equal to or smaller than a width of the corresponding bridge.

9. The motor of claim 7, wherein each of the rotor cores further comprises a bridge connection portion which extends from the corresponding bridge, and the barrier hole is disposed at both sides of the bridge connection portion in the circumferential direction of the rotor.

10. The motor of claim 7, wherein each of the rotor cores further comprises a guide hole that is disposed at an outer side of the barrier hole in a radial direction of the rotor, wherein
the guide hole comprises a guide part extending in an outward radial direction of the rotor, and
wherein a magnetic path between the guide portion and a permanent magnet adjacent to the guide hole among the plurality of the permanent magnets is spread in the outer radial direction of the rotor.

11. The motor of claim 2, wherein each of the rotor cores comprises a through hole allowing a fastening member to pass therethrough in an axial direction.

12. The motor of claim 2, wherein the rotor further comprises cover plates coupled to the rotor cores while being disposed to cover outer sides of the permanent magnets in an axial direction, the cover plates including non-magnetic material.

13. The motor of claim 11, wherein the rotor further comprises injection mold material filled in the through hole.

14. The motor of claim 1, wherein
the rotor is configured to rotate through electromagnetic interaction with the stator and comprises a rotor body, the plurality of permanent magnets being inserted into an inside of the rotor body while being arranged in a circumferential direction of the rotor body,
a motor shaft is coupled to the rotor body, the motor shaft being inserted into the shaft hole,
the plurality of rotor cores are connected to the sleeve and are spaced apart from each other in the circumferential direction of the rotor body to form a plurality of rotor slots that accommodate the plurality of permanent magnets, and
the plurality of support protrusions allow inner side edges of the plurality of permanent magnets to be spaced apart from the sleeve while being disposed to support a middle portion of the inner side edge of each of the plurality of permanent magnets.

15. The motor of claim 14, wherein the rotor body further comprises a plurality of bridges which are configured to connect the sleeve to the respective rotor cores and are spaced apart from the support protrusions in the circumferential direction of the rotor body,
the plurality of permanent magnets comprise a first permanent magnet and a second permanent magnet that are adjacent to each other,
the plurality of support protrusions comprises a first support protrusion to support the first permanent magnet and a second support protrusion to support the second permanent magnet, and
the rotor body further comprises a first protrusion connection bridge and a second protrusion connection bridge which are configured to connect one of the rotor cores, the one rotor core disposed between the first permanent magnet and the second permanent magnet, to the first support protrusion and the second support protrusion, respectively.
